(19) Europäisches Patentamt
European Patent Office
Office européen des brevets

(11) **EP 2 594 030 B1**

(12) **EUROPEAN PATENT SPECIFICATION**

(45) Date of publication and mention
of the grant of the patent:
**30.09.2015 Bulletin 2015/40**

(21) Application number: **10856290.1**

(22) Date of filing: **26.08.2010**

(51) Int Cl.:
*H04L 1/06* (2006.01)     *H04B 7/06* (2006.01)
*H04L 1/00* (2006.01)     *H04L 5/00* (2006.01)
*H04B 7/04* (2006.01)     *H04L 25/03* (2006.01)

(86) International application number:
**PCT/CN2010/076383**

(87) International publication number:
**WO 2012/024837 (01.03.2012 Gazette 2012/09)**

(54) **METHOD AND SYSTEM FOR PRECODING**

VERFAHREN UND SYSTEM ZUR VORCODIERUNG

PROCÉDÉ ET SYSTÈME DE PRÉCODAGE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**22.05.2013 Bulletin 2013/21**

(60) Divisional application:
**15167050.2**

(73) Proprietor: **Huawei Technologies Co., Ltd.
Longgang District
Shenzhen, Guangdong 518129 (CN)**

(72) Inventors:
• **MAZZARESE, David
Beijing 100082 (CN)**
• **ZHOU, Yongxing
Shenzhen
Guangdong 518129 (CN)**

(74) Representative: **Goddar, Heinz J.
Boehmert & Boehmert
Anwaltspartnerschaft mbB
Patentanwälte Rechtsanwälte
Pettenkoferstrasse 20-22
80336 München (DE)**

(56) References cited:
WO-A1-2009/096708     WO-A2-2008/022243
WO-A2-2009/023532     CN-A- 101 330 479
CN-A- 101 388 699     CN-A- 101 615 979

• **SAMSUNG: "A feedback framework based on W2W1 for Rel. 10", 3GPP DRAFT; R1-103664 FEEDBACK FRAMEWORK_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20100628 - 20100702, 24 June 2010 (2010-06-24), XP050598508, [retrieved on 2010-06-24]**
• **HUAWEI: "Double codebook based Differential feedback for MU-MIMO enhancement", 3GPP DRAFT; R1-103449 DOUBLE CODEBOOK BASED DIFFERENTIAL FEEDBACK FOR MU-MIMO ENHANCEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20100628, 22 June 2010 (2010-06-22), XP050448975, [retrieved on 2010-06-22]**
• **HUAWEI: "Extensions to Rel-8 type CQI/PMI/RI feedback using double codebook structure", 3GPP DRAFT; R1-100251 EXTENSIONS TO REL-8 CQIPMIRI FEEDBACK USING DOUBLE CODEBOOK STRUCTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050417935, [retrieved on 2010-01-12]**

• NOKIA ET AL: "Double codebook performance evaluation", 3GPP DRAFT; R1-103805, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20100628, 23 June 2010 (2010-06-23), XP050449424, [retrieved on 2010-06-23]

**Description**

**Field of the Invention**

The present invention relates to communication technology, and in particular to a method and system for precoding.

**Background of the Invention**

In MIMO OFDMA cellular systems, closed-loop MIMO precoding is defined to enable high throughput downlink transmission to fixed and nomadic users. Feedback information is obtained by the transmitter via the report of a precoding matrix index (PMI) from a receiver to a transmitter. This PMI is used to represent a matrix in a codebook (a set of matrices), and the PMI is used by the transmitter to derive a downlink precoder.

Simple codebook structures are used in the first generation of MIMO OFDMA systems, such that the PMI can be represented with a few bits. Small codebooks can be used to achieve a coarse quantization of the spatial channel. For example, a 4-bit codebook is defined and the 4-bit PMI can be reported via a capacity-limited feedback channel called PUCCH [1,2]. Preceding matrices are defined for each possible transmission rank, which determines the size of the precoding matrix. The overall codebook is a set of matrices for each rank. The feedback report thus consists of a rank indication (RI) and a PMI in the codebook subset of the given rank RI. Since the rank of the propagation channel varies slowly in comparison with fast fading over which the PMI is adapted, the rank indication is reported with a longer period than the PMI.

Since the rank indication remains valid during several reports of the PMI, it can be encoded with a better error protection code in order to ensure that consecutive PMI reports are not invalidated by one erroneous RI report. In general, this is naturally ensured by the fact that the rank can take values in a limited range, such as {1, 2, 3, 4} in LTE (Long Term Evolution) system Rel-8, due to the limitation to a maximum of 4 antennas at the transmitter and 4 antennas at the receiver. Thus the RI can be represented by 2 bits. Since the PMI is in general reported along with a channel quality indication (CQI), which is short for CQI that represents the channel quality assuming that the transmitter precodes with the reported PMI, the total size of the feedback message that contains the PMI+CQI is larger than the 4 bits used to represent just the PMI. For example, in LTE Rel-8, the message size will be 8 to 11 bits with one to two CQIs, respectively. The PUCCH is transmitted in a fixed-size time-frequency resource with a fixed modulation. The 2 bits of RI that are reported individually are better protected than the 8 or 11 bits of PMI and CQI that are jointly reported, since the 2 bits of RI enjoy a lower error-correction encoding rate.

WO 2009/096708 A1 discloses that channel information for precoding can be obtained using a sounding channel, a codebook, channel quantization, etc. Feedback data transmitted from a UE to a BS may include CQI, PMI, and RI. A method includes selecting M subbands from a whole frequency band, and transmitting a first precoding matrix indicator for M subbands and a second PMI for the remaining band, wherein the first PMI is a PMI of a codebook selected from a first codebook set including a plurality of codebooks and the second PMI is a PMI of a codebook selected form a second codebook set including a part of the plurality of codebooks of the first codebook set.

SAMSUNG "A feedback framework based on W2W1 for Rel. 10" 3GPP draft, R1-103664 discloses that two codebooks need to be designed. A report can contain both $W_1$ and $W_2$, and a precoder W is derived from $W_1$ and $W_2$. The precoder W for subband can be built as $W=W_2W_1$, and $W_1$ can be a precoding matrix as defined in an implicit feedback. $W_1$ may represent a wideband and $W_2$ may represent a subband. $W_1$ is from a codebook $C_1$ and $W_2$ is from a codebook $C_2$.

HUAWEI: "Double codebook based different feedback for MU-MIMO enhancement", 3GPP draft R1-103449 discloses a precoding matrix $W=W_1W_2$ and/or $W=W_2W_1$, wherein $W_1$ is wideband from the Rel-8 4Tx codebook, and $W_2$ is subband and is a diagonal matrix from a codebook. Based on a PUCCH reporting mode 2-1 it is determined that the matrix index for $W_2$ was added in a subband CQI report. A periodic feedback of the first and second matrix indices in the same report include subband PMI and subband CQI for each subband, and all subbands are reported. An overhead of the PUCCH report includes a subset of $W_1$ (1 bit), a wideband report (remaining 3bits for subset of $W_1$) and a subband report (2 bits for $W_2$).

**Summary of the Invention**

To achieve the objective of the present invention, the present invention is implemented by using the technical solutions as defined in the independent claims. Preferred embodiments can be derived from the dependent claims.

**Brief Description of the Drawing**

Fig. 1 shows a flowchart of a method for precoding in an embodiment of the present invention;
Fig. 2 shows a flowchart of a method for precoding in another embodiment of the invention;
Fig. 3 shows a flowchart of a method for precoding in another embodiment of the invention;
Fig. 4 shows a user equipment in an embodiment of the invention;
Fig. 5 shows a transmitter in an embodiment of the invention;

Fig. 6 shows a flowchart of a method for precoding in an embodiment of the present invention; and
Fig. 7 shows a system in an embodiment of the invention.

## Detailed Description of the Embodiments

Emobiments of the present invention relates to a method for reporting multiple quantized representation of the channel state information of the propagation channel in a capacity-limited feedback channel using a double codebook structure. The wireless communication system comprises at least one transmitter and at least one receiver. The transmitter may be configured in an network entity, such as a base station, an eNodeB or an access point. The receiver may be configured in a user euipment (UE), such as a mobile device, a cellular telephone, a wireless enabled personal digital assitant (PDA) a wireless enaled laptop computer, or other such devices. At least one reference signal to the receiver and a feedback channel from the reciever allow the transmission from the transmitter using codebook-based precoding when the transmitter is equipped with multiple transmit antennas.

For high-throughput operation in MIMO OFDMA systems, such as LTE system, IEEE 802.16e/m system or other such systems, a receiver may be asked to feedback one PMI for each subband of the bandwidth of the system, since it offers a better granularity than a wideband precoder and allows the transmitter to adapt its precoder to the frequency-selectivity of the wireless propagation channel, as well as providing information for multiuser diversity scheduling. In order to take advantage of these properties while limiting the rate of feedback in the channel to acceptable level, a receiver may be asked to report the PMIs for a set of selected subbands that do not span the entire bandwidth of operation. Additionally, in order to ensure a smooth operation of the scheduler at the transmitter, it is often also required that the receiver reports a wideband PMI along with the subband PMIs of selected subbands, so that the transmitter has channel state information for scheduling that receiver in any of the subbands for which a subband PMI is not reported. As pointed out above, a CQI is reported in association with a PMI, so a wideband CQI is reported along the wideband PMI, while a subband CQI is reported for each of the subband PMIs.

Enhancements of the feedback for closed-loop precoding beyond the simple 4-bit codebook or antenna array sizes for larger transmission would require more complex codebook structures, as well as a larger codebook size. A first type of enhanced codebook contains matrices that provide a quantization of the MIMO propagation channel between an array of transmitting antennas and an array of receiving antennas as presented in [3], where the matrices take the form:

$$\mathbf{W} = \mathbf{W}_{MI1}^{(1)} \mathbf{W}_{MI2}^{(2)}$$

The inner precoder $\mathbf{W}_{MI1}^{(1)}$ has a block diagonal structure

$$\mathbf{W}_{MI1}^{(1)} = \begin{bmatrix} \widetilde{\mathbf{W}}_{MI1}^{(1)} & \mathbf{0} \\ \mathbf{0} & \widetilde{\mathbf{W}}_{MI1}^{(1)} \end{bmatrix}$$

For rank 1, the precoder could be formed as

$$\mathbf{W} = \begin{bmatrix} \widetilde{\mathbf{W}}_{MI1}^{(1)} & \mathbf{0} \\ \mathbf{0} & \widetilde{\mathbf{W}}_{MI1}^{(1)} \end{bmatrix} \begin{bmatrix} 1 \\ \alpha \end{bmatrix}, \quad \alpha \in \{1, -1, j, -j\}$$

The rank 2 case would follow similarly as

$$\mathbf{W} = \begin{bmatrix} \widetilde{\mathbf{W}}_{MI1}^{(1)} & \mathbf{0} \\ \mathbf{0} & \widetilde{\mathbf{W}}_{MI1}^{(1)} \end{bmatrix} \begin{bmatrix} 1 & 1 \\ \alpha & -\alpha \end{bmatrix}, \quad \alpha \in \{1, j\}$$

The second matrix represents a co-phasing factor that reflects short-term channel variations and can be made to adjust the structure of the overall precoder W to match either a single-polarized linear uniform array (ULA) or a cross-polarized array at the transmitter.

The embodiments of the invention described herein may be used for various broadband wireless communication systems where a double codebook of precoding matrices is known by a transmitter and a receiver and the transmitter is equipped with multiple antennas, some of which may have the same or different polarizations. And the codebook is used for sending feedback information from the receiver to the transmitter via a capacity-limited feedback channel.A double codebook is composed of two codebooks, which are sets of matrices, and the combination of one matrix from a first codebook $C_1$ and one matrix from a second codebook $C_2$ forms a precoder that can be used by the transmitter to send data to a receiver via multiple transmit antennas.

In an embodiment, a receiver, which can be UE, is connected to a transmitter ,which can be an access point for a duration much longer than the transmission time interval. During this duration, the receiver would send several feedback reports containing indices in a double codebook to recommend one or several precoders to the transmitter.

In one embodiment, at least one message including a rank indication, a first codebook index $n_1$ in a first codebook $C_1$, and two codebook indices $k_1$ and $k_2$ in a second codebook $C_2$, which is contained in at least one report, is fed back from the receiver to the transmitter. The indices $(n_1, k_1)$ represent a wideband precoder $W_1$

in the double codebook, while the indices $(n_1, k_2)$ represent a subband precoder $W_2$ in the double codebook, based on the same matrix with index $n_1$ in the codebook $C_1$. A wideband channel quality indicator , that is CQI, is also reported in reference to the wideband precoder represented by $(n_1, k_1)$, while a subband channel quality indicator (CQI) is also reported in reference to the subband precoder represented by $(n_1, k_2)$.

In some embodiments where the index $k_1$ is not reported, it is assumed to be pre-defined with a common assumption known by both the receiver and the transmiter.

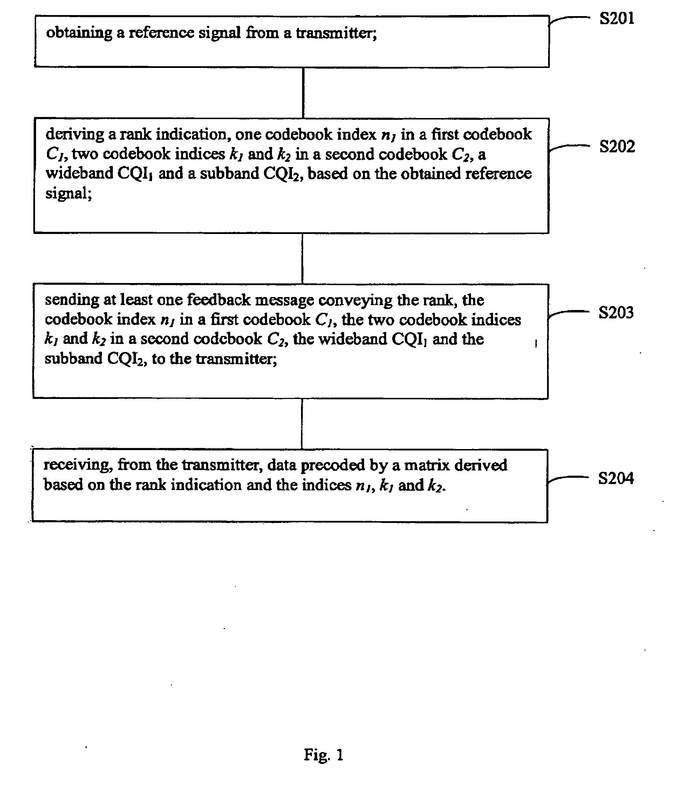

In an embodiment, a method for precoding feedback in a wireless communication system is disclosed. Referring to Figure 1, including:

S201, Obtaining , by a user equipment , a reference signal from a transmitter;

S202, Deriving, by the user equipment , a rank indication, a first codebook index $n_1$ in a first codebook $C_1$, two codebook indices $k_1$ and $k_2$ in a second codebook $C_2$, a wideband $CQI_1$ associated with a wideband precoding matrix represented by indices $(n_1, k_1)$, and a subband $CQI_2$ associated with a wideband precoding matrix represented by indices $(n_1, k_1)$, based on the obtained reference signal;

S203, sending , by the user equipment, a feedback report conveying the rank indication, the first codebook index $n_1$, the two codebook indices $k_1$ and $k_2$, the wideband $CQI_1$, and the subband $CQI_2$, to the transmitter; and

S204, receiving, by the user equipment from the transmitter, data precoded by a a first precoder determined by the transmitter based on the rank indication and the indices $n_1$, $k_1$ and $k_2$.

In one embodiment the first precoder determined by the transmitter based on the rank indication and the indices $n_1$, $k_1$ and $k_2$ comprises:

the first precoder is determined by the transmitter based on the rank indication ,a second precoder and a third precoder, wherein the second precoder is determined by the indices $n_1$ and $k_1$ at the transmitter, which represents a wideband precoder,and the third precoder is determined by the indices $n_1$ and $k_2$ at the transmitter ,which represents a subband precoder.

wherein the second precoder is determined by the indices $n_1$ and $k_1$ at the transmitter comprises:

the second precoder is determined as $\mathbf{W} = \mathbf{W}_{n_1}^{(1)} \mathbf{W}_{k_1}^{(2)}$ , and the $\mathbf{W}_{n_1}^{(1)}$ represents the matrix determined by the index $n_1$ in the

codebook $C_1$, and the $\mathbf{W}_{k_1}^{(2)}$ represents the matrix determined by the index $k_1$ in the codebook $C_2$;

the third precoder is determined by the indices $n_1$ and $k_2$ at the transmitter comprises:

the third precoder is determined as $\mathbf{W} = \mathbf{W}_{n_1}^{(1)} \mathbf{W}_{k_2}^{(2)}$ , and the $\mathbf{W}_{n_1}^{(1)}$ represents the matrix determined by the index $n_1$ in the codebook $C_1$ ,and the $\mathbf{W}_{k_2}^{(2)}$ represents the matrix determined by the index $k_2$ in the codebook $C_2$.

In one embodiment the second precoder is determined by the indices $n_1$ and $k_1$ at the transmitter comprises:

the second precoder is determined as $\mathbf{W} = \mathbf{W}_{k_1}^{(2)} \mathbf{W}_{n_1}^{(1)}$ , and the $\mathbf{W}_{k_1}^{(2)}$ represents the matrix determined by the index $k_1$ in the codebook $C_2$ ,and the $\mathbf{W}_{n_1}^{(1)}$ represents the matrix determined by the index $n_1$ in the codebook $C_1$;

the third precoder is determined by the indices $n_1$ and $k_2$ at the transmitter comprises:

the third precoder is determined as $\mathbf{W} = \mathbf{W}_{k_2}^{(2)} \mathbf{W}_{n_1}^{(1)}$ , and the $\mathbf{W}_{k_2}^{(2)}$ represents the matrix determined by the index $k_2$ in the codebook $C_2$ ,and the $\mathbf{W}_{n_1}^{(1)}$ represents the matrix determined by the index $n_1$ in the codebook $C_1$.

The method above allows to reduce the number of reported indices for representing two precoders in a double codebook, and there is no performance impact.

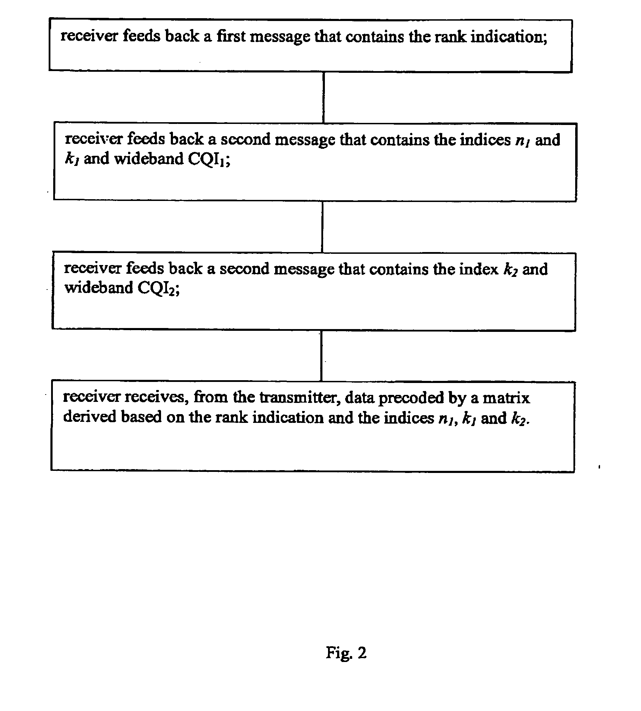

In one embodiment, the transmitter may ask the receiver to feed back in a series of messages as exemplified in figure 2. A first message contains the rank indication. A second message contains the indices $n_1$ and $k_1$ and the wideband channel quality indicator $CQI_1$. A third message contains the index $k_2$ and the subband channel quality indicator CQI2. And the receiver receives, from the transmitter, data precoded by a matrix derived based on the rank indication and the indices n1, k1 and k2.

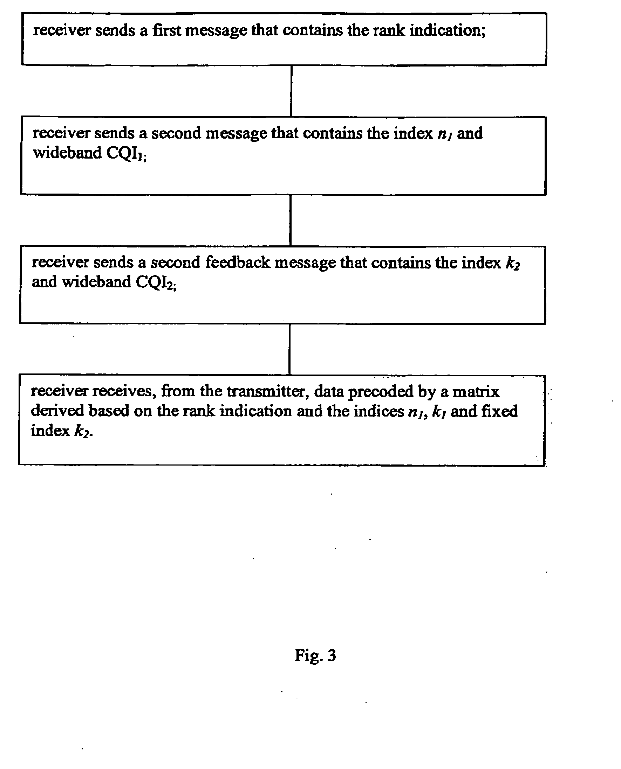

In one embodiment, the transmitter may ask the receiver to feed back in a series of compact messages that can contain one matrix index, as exemplified in figure 3. A first message contains the rank indication. A second message contains the index $n_1$ and the wideband $CQI_1$. A third message contains the index $k_2$ and the subband $CQI_2$. And the index $k_1$ may be implicitly known by both the transmitter and the receiver as a fixed matrix in the codebook $C_2$. And the receiver receives, from the transmitter, data precoded by a matrix derived based on the rank indication and the indices n1, k1 and k2.

In one embodiment, a precoding matrix in the double codebook is derived as $\mathbf{W} = \mathbf{W}^{(2)}\mathbf{W}^{(1)}$ , where $\mathbf{W}^{(1)}$ is a matrix from the codebook $C_1$, while $\mathbf{W}^{(2)}$ is a matrix from the codebook $C_2$. The wideband precoder $\mathbf{W}_1$ is derived at the receiver as $\mathbf{W}_1 = \mathbf{W}_{k_1}^{(2)}\mathbf{W}_{n_1}^{(1)}$ , while the subband precoder $\mathbf{W}_2$ is derived as $\mathbf{W}_2 = \mathbf{W}_{k_2}^{(2)}\mathbf{W}_{n_1}^{(1)}$ . A wideband CQI, denoted as $CQI_1$, represents the channel quality assuming the wideband precoding matrix is used at the transmitter. A subband CQI, denoted as $CQI_2$, represents the channel quality assuming the subband precoding matrix is used at the transmitter. In one embodiment, the index $k_1$ is pre-defined at both the transmitter and receiver based on a fixed assumption, and the matrix which the index $k_1$ represents may be the identity matrix, in which case the wideband precoder is simply represented as $\mathbf{W}_{n_1}^{(1)}$ .

In one embodiment, a precoding matrix in the double codebook is derived as $\mathbf{W} = \mathbf{W}^{(1)}\mathbf{W}^{(2)}$ , where $\mathbf{W}^{(1)}$ is a matrix from the codebook $C_1$, while $\mathbf{W}^{(2)}$ is a matrix from the codebook $C_2$. The wideband precoder $\mathbf{W}_1$ is derived at the receiver as $\mathbf{W}_1 = \mathbf{W}_{n_1}^{(1)}\mathbf{W}_{k_1}^{(2)}$ , while the subband precoder $\mathbf{W}_2$ is derived as $\mathbf{W}_2 = \mathbf{W}_{n_1}^{(1)}\mathbf{W}_{k_2}^{(2)}$ . A wideband CQI, denoted as $CQI_1$, represents the channel quality assuming the wideband precoding matrix is used at the transmitter. A subband CQI, denoted as $CQI_2$, represents the channel quality assuming the subband precoding matrix is used at the transmitter. In one embodiment the index $k_1$ is pre-defined at both the transmitter and receiver based on a fixed assumption, and the matrix which the index $k_1$ represents may be the identity matrix or a block matrix composed of identity matrices of smaller dimension.

In one embodiment, a precoding matrix in the double codebook is derived as $\mathbf{W} = \mathbf{W}^{(1)}\mathbf{W}^{(2)}$, where $\mathbf{W}^{(1)}$ is a matrix from the codebook $C_1$, while $\mathbf{W}^{(2)}$ is a matrix from the codebook $C_2$. The wideband precoder $\mathbf{W}_1$ is derived at the receiver as $\mathbf{W}_1 = \mathbf{W}_{n_1}^{(1)}\mathbf{W}_{k_1}^{(2)}$ , while the subband precoder is $\mathbf{W}_2$ derived as $\mathbf{W}_2 = \mathbf{W}_{n_1}^{(1)}\mathbf{W}_{k_2}^{(2)}$ . A wideband CQI, denoted as $CQI_1$, represents the channel quality assuming the wideband precoding matrix is used at the transmitter. A subband CQI, denoted as $CQI_2$, represents the channel quality assuming the subband precoding matrix is used at the transmitter. In one embodiment the index $k_1$ is reported based on a subset of

the codebook $C_2$, and $k_1$ may be reported with fewer bits than the index $k_2$. For example, $k_2$ is the index in the subset of the codebook $C_2$.

In one embodiment, a precoding matrix in the double codebook is derived as $\mathbf{W} = \mathbf{W}^{(1)}\mathbf{W}^{(2)}$, where $R = \mathbf{W}^{(1)}$ is a normalized covariance matrix from the codebook $C_1$, while $\mathbf{W}^{(2)}$ is a matrix from the codebook $C_2$. The wideband precoder $\mathbf{W}_1$ is derived at the receiver as $\mathbf{W}_1 = \mathbf{W}_{n_1}^{(1)}\mathbf{W}_{k_1}^{(2)}$ , while the subband precoder $\mathbf{W}_2$ is derived as $\mathbf{W}_2 = \mathbf{W}_{n_1}^{(1)}\mathbf{W}_{k_2}^{(2)}$ . A wideband CQI, denoted as $CQI_1$, represents the channel quality assuming the wideband precoding matrix is used at the transmitter. A subband CQI, denoted as $CQI_2$, represents the channel quality assuming the subband precoding matrix is used at the transmitter. In one embodiment the index $k_1$ is not reported but it is pre-defined at both the transmitter and receiver based on a common assumption, this matrix which the index $k_1$ represents may be the principal eigenvector of the matrix R, or the best approximation of the principal eigenvector of the matrix R by a vector in the codebook $C_2$.

Note that for skilled person in the art, the embodiment above may be used for at least one subband.

The method above allows to reduce the number of reported indices and save the system resources, without performance reducing.

It is understandable to those skilled in the art that all or part of the steps of the foregoing embodiments may be implemented by hardware instructed by a computer program. The program may be stored in a computer-readable storage medium. When being executed, the program performs all or part of the steps in foregoing method embodiments.

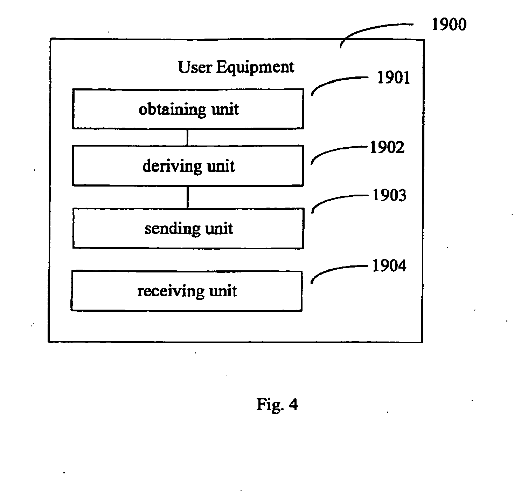

In another embodiment of the present invention, a user equipment that can realize all the above method is also disclosed. Referring to Figure 4 , the user equipment 1900 includes:

a obtaining unit 1901, configured to obtain a reference signal from a transmitter;
a deriving unit 1902, configured to derive a rank indication, a codebook index $n_1$ in a first codebook $C_1$ and codebook indices $k_1$ and $k_2$ in a second codebook $C_2$, a wideband channel quality indicator $CQI_1$ and a subband channel quality indicator $CQI_2$, based on the reference signal obtained by the obtaining unit;,
a sending unit 1903, configured to send the rank indication, the codebook index $n_1$ in the first codebook $C_1$, the codebook indices $k_1$ and $k_2$ in the second codebook $C_2$, the wideband $CQI_1$ and the subband $CQI_2$ derived by the deriving unit, to the transmitter;and
a receiving unit 1904, configured to receive, from the transmittter, the data preceded by a first precoder determined by the transmitter based on the rank indication and the indices $n_1$, $k_1$ and $k_2$.

Note that for skilled person in the art, the embodiment above may be used for at least one subband.

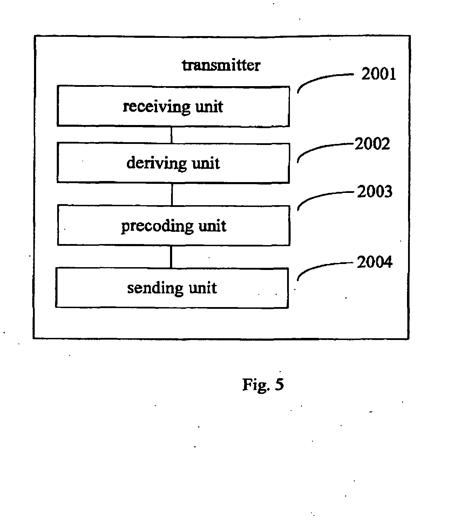

The embodiment above allows to reduce the number of reported indices and save the system resources, without performance reducing. In another embodiment of the present invention,a transmitter is described as figure 5. In this embodiment ,the transmitter may be a base station.

The transmitter, comprising:

a receiving unit 2001, configured to receive a rank indication, a codebook index $n_1$ in a first codebook $C_1$, codebook indices $k_1$ and $k_2$ in a second codebook $C_2$, the wideband channel quality indicator $CQI_1$ and the subband channel quality indicator $CQI_2$ from a user equipment;
a deriving unit 2002, configured to derive a first precoder determined based on the rank indication and the indices $n_1$, $k_1$ and $k_2$ received by the receiving unit 2001; and
a precoding unit 2003, configured to precode the data to be sent to the user equipment by the first precoder derived by the deriving unit 2002;and
a sending unit 2004, configured to send the data precoded by the precoding unit 2003 to the user equipment.
the deriving unit comprising:

a first deriving module, configured to derive a second precoder representing a wideband precoder determined by the indices $n_1$ and $k_1$ ;and
a second deriving module, configured to a third precoder representing a subband precoder determined by the indices $n_1$ and $k_2$.

the deriving unit comprising:

a first deriving module, configured to derive a second precoder representing a wideband precoder determined by the indices $n_1$ and $k_1$ ;and
a second deriving module, configured to a third precoder representing a subband precoder determined by the indices $n_1$ and $k_2$.
the first deriving module comprising:

a first determining submodule, configured to determine the matrix $\mathbf{W}_{n_1}^{(1)}$ by the index $n_1$ in the codebook $C_1$;
a second determining submodule, configured to determine the matrix $\mathbf{W}_{k_1}^{(2)}$ by the index $k_1$ in the codebook $C_2$; and
a third determining submodule, configured to determine the second precoder $W_1$ as

$$\mathbf{W}_1 = \mathbf{W}_{n_1}^{(1)}\mathbf{W}_{k_1}^{(2)};$$

the second deriving module comprising:

a fourth determining submodule, configured to determine the matrix $\mathbf{W}_{n_1}^{(1)}$ by the index $n_1$ in the codebook $C_1$;
a fifth determining submodule, configured to determine the matrix $\mathbf{W}_{k_2}^{(2)}$ by the index $k_2$ in the codebook $C_2$; and
a sixth determining submodule, configured to determined the third precoder $\mathbf{W}_2$ as

$$\mathbf{W}_2 = \mathbf{W}_{n_1}^{(1)}\mathbf{W}_{k_2}^{(2)};$$
or,

the first deriving module comprising:

the first determining submodule, configured to determine the matrix $\mathbf{W}_{k_1}^{(2)}$ by the index $k_1$ in the codebook $C_2$;
the second determining submodule, configured to determine the matrix $\mathbf{W}_{n_1}^{(1)}$ by the index $n_1$ in the codebook $C_1$;
the third determining submodule, configured to determine the second precoder $\mathbf{W}_1$

as $$\mathbf{W}_1 = \mathbf{W}_{k_1}^{(2)}\mathbf{W}_{n_1}^{(1)};$$

the second deriving module comprising:

the fourth determining submodule, configured to determine the matrix $\mathbf{W}_{k_2}^{(2)}$ by the index $k_2$ in the codebook $C_2$;
the fifth determining submodule, configured to determine the matrix $\mathbf{W}_{n_1}^{(1)}$ by the index $n_1$ in the codebook $C_1$;
sixth determining submodule, configured to determine the third precoder $\mathbf{W}_2$ as

$$\mathbf{W}_2 = \mathbf{W}_{k_2}^{(2)}\mathbf{W}_{n_1}^{(1)}.$$

Note that for skilled person in the art, the embodiment above may be used for at least one subband.

The embodiment above allows to reduce the number of reported indices and save the system resources, without performance reducing.

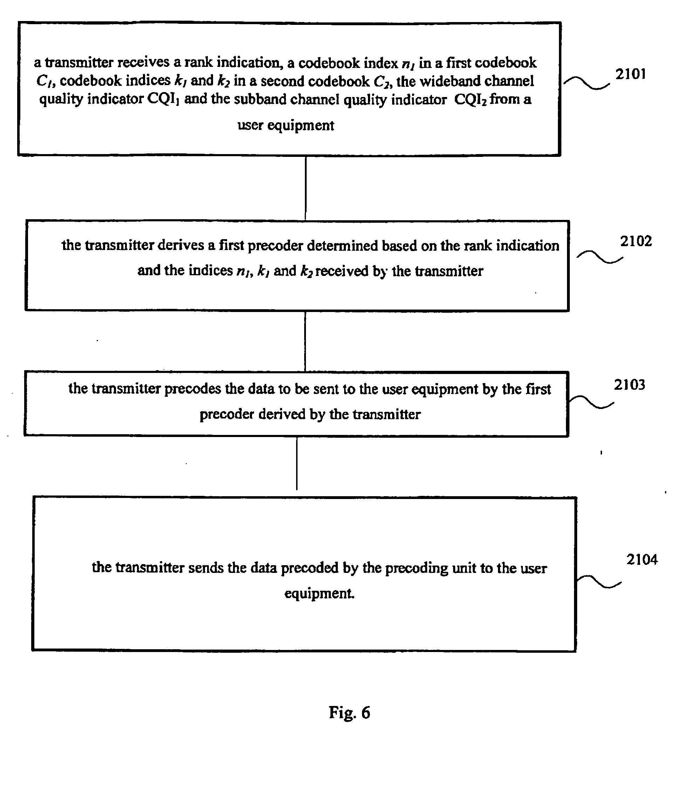

In one embodiment,a method for precoding in a wireless communication system is detailed in figure 6. The method comprise:

S2101, a transmitter receives a rank indication, a codebook index $n_1$ in a first codebook $C_1$, codebook indices $k_1$ and $k_2$ in a second codebook $C_2$, the wideband channel quality indicator $CQI_1$ and the subband channel quality indicator $CQI_2$ from a user equipment;

S2102, the transmitter derives a first precoder determined based on the rank indication and the indices $n_1$, $k_1$ and $k_2$ received by the transmitter;

S2103, the transmitter precodes the data to be sent to the user equipment by the first precoder derived by the transmitter; and

S2104, the transmitter sends the data precoded by the precoding unit to the user equipment.

wherein the transmitter deriving a first precoder determined based on the rank indication and the indices $n_1$, $k_1$ and $k_2$ received by the transmitter, comprising:

the transmitter deriving the first precoder determined based on the rank indication, a second precoder and a third precoder, in which the second precoder is determined by the indices $n_1$ and $k_1$ at the transmitter, which represents a wideband precoder, and the third precoder is determined by the indices $n_1$ and $k_2$ at the transmitter, which represents a subband precoder.

wherein the second precoder is determined by the indices $n_1$ and $k_1$ at the transmitter comprises:

the second precoder $\mathbf{W}_1$ is determined as $\mathbf{W}_1 = \mathbf{W}_{n_1}^{(1)}\mathbf{W}_{k_1}^{(2)}$, in which the $\mathbf{W}_{n_1}^{(1)}$ represents the matrix determined by the index $n_1$ in the codebook $C_1$, and the $\mathbf{W}_{k_1}^{(2)}$ represents the matrix determined by the index $k_1$ in the codebook $C_2$;

the third precoder is determined by the indices $n_1$ and $k_2$ at the transmitter comprises:

the third precoder $\mathbf{W}_2$ is determined as $\mathbf{W}_2 = \mathbf{W}_{n_1}^{(1)}\mathbf{W}_{k_2}^{(2)}$, in which the $\mathbf{W}_{n_1}^{(1)}$ represents the matrix determined by the index $n_1$ in the codebook $C_1$, and the $\mathbf{W}_{k_2}^{(2)}$ represents the matrix determined by the index $k_2$ in the codebook $C_2$.

wherein the second precoder is determined by the indices $n_1$ and $k_1$ at the transmitter comprises:

the second precoder $W_1$ is determined as $\mathbf{W}_1 = \mathbf{W}_{k_1}^{(2)}\mathbf{W}_{n_1}^{(1)}$, in which the $\mathbf{W}_{k_1}^{(2)}$ represents the matrix determined by the index $k_1$ in the codebook $C_2$, and the $\mathbf{W}_{n_1}^{(1)}$ represents the matrix determined by the index $n_1$ in the codebook $C_1$;

the third precoder is determined by the indices $n_1$ and $k_2$ at the transmitter comprises:

the third precoder $\mathbf{W}_2$ is determined as $\mathbf{W}_2 = \mathbf{W}_{k_2}^{(2)}\mathbf{W}_{n_1}^{(1)}$, in which the $\mathbf{W}_{k_2}^{(2)}$ represents the matrix determined by the index $k_2$ in the codebook $C_2$, and the $\mathbf{W}_{n_1}^{(1)}$ represents the matrix determined by the index $n_1$ in the codebook $C_1$.

Note that for skilled person in the art, the embodiment above may be used for at least one subband.

The embodiment above allows to reduce the number of reported indices and save the system resources , without performance reducing.

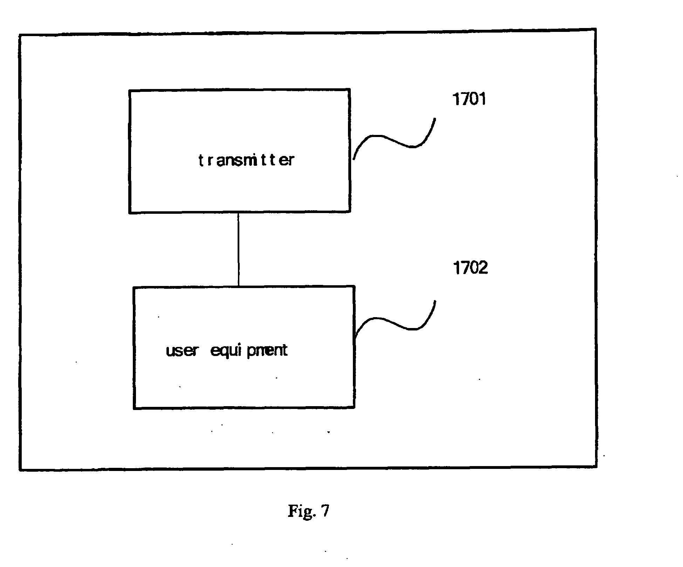

In one embodiment, a system for precoding is detailed in figure 7. The system comprises a transmitter 1701 and a user equipment1702. The transmitter may be a base station.

The user equipment may comprise a receiving unit, configured to receive a reference signal from a transmitter;

a deriving unit, configured to derive a rank indication, a codebook index $n_1$ in a first codebook $C_1$ and codebook indices $k_1$ and $in$ a second codebook $C_2$, a wideband channel quality indicator $CQI_1$ and a subband channel quality indicator $CQI_2$, based on the reference signal obtained by the receiving unit;,

a sending unit, configured to send the rank indication, the codebook index $n_1$ in the first codebook $C_1$, the codebook indices $k_1$ and $k_2$ in the second codebook $C_2$, the wideband $CQI_1$ and the subband $CQI_2$ derived by the deriving unit, to the transmitter, and

a receiving unit, configured to receive, from the transmitter, the data precoded by a first precoder determined by the transmitter based on the rank indication and the indices $n_1$, $k_1$ and $k_2$

The transmitter may comprise a receiving unit 2001, configured to receive a rank indication, a codebook index $n_1$ in a first codebook $C_1$, codebook indices $k_1$ and $k_2$ in a second codebook $C_2$, the wideband channel quality indicator $CQI_1$ and the subband channel quality indicator $CQI_2$ from a user equipment;

a deriving unit, configured to derive a first precoder determined based on the rank indication and the indices $n_1$, $k_1$ and $k_2$ received by the receiving unit; and

a precoding unit, configured to precode the data to be sent to the user equipment by the first precoder derived by the deriving unit;and

a sending unit, configured to send the data precoded by the precoding unit 2003 to the user equipment.
the deriving unit comprising:

> a first deriving module, configured to derive a second precoder representing a wideband precoder determined by the indices $n_1$ and $k_1$; and
> a second deriving module, configured to a third precoder representing a subband precoder determined by the indices $n_1$ and $k_2$.
> the deriving unit comprising:
>
>> a first deriving module, configured to derive a second precoder representing a wideband precoder determined by the indices $n_1$ and $k_1$; and
>> a second deriving module, configured to a third precoder representing a subband precoder determined by the indices $n_1$ and $k_2$.
>>
>> the first deriving module comprising:
>>
>>> a first determining submodule, configured to determine the matrix $\mathbf{W}_{n_1}^{(1)}$ by the index $n_1$ in the codebook $C_1$;
>>> a second determining submodule, configured to determine the matrix $\mathbf{W}_{k_1}^{(2)}$ by the index $k_1$ in the codebook $C_2$; and
>>> a third determining submodule, configured to determine the second precoder $\mathbf{W}_1$ as
>>>
>>> $$\mathbf{W}_1 = \mathbf{W}_{n_1}^{(1)}\mathbf{W}_{k_1}^{(2)};$$
>>>
>>> the second deriving module comprising:
>>>
>>>> a fourth determining submodule, configured to determine the matrix $\mathbf{W}_{n_1}^{(1)}$ by the index $n_1$ in the codebook $C_1$;
>>>> a fifth determining submodule, configured to determine the matrix $\mathbf{W}_{k_2}^{(2)}$ by the
>>>> a sixth determining submodule, configured to determine the third precoder $\mathbf{W}_2$ as
>>>>
>>>> $$\mathbf{W}_2 = \mathbf{W}_{n_1}^{(1)}\mathbf{W}_{k_2}^{(2)};$$
>>>>
>>>> or,
>>>> the first deriving module comprising:
>>>>
>>>>> the first determining submodule, configured to determine the matrix $\mathbf{W}_{k_1}^{(2)}$ by the index $k_1$ in the codebook $C_2$;
>>>>> the second determining submodule, configured to determine the matrix $\mathbf{W}_{n_1}^{(1)}$ by the index $n_1$ in

the codebook $C_1$;
the third determining submodule, configured to determine the second precoder $\mathbf{W}_1$ as

$$\mathbf{W}_1 = \mathbf{W}_{k_1}^{(2)}\mathbf{W}_{n_1}^{(1)};$$

the second deriving module comprising:

> the fourth determining submodule, configured to determine the matrix $\mathbf{W}_{k_2}^{(2)}$ by the index $k_2$ in the codebook $C_2$;
> the fifth determining submodule, configured to determine the matrix $\mathbf{W}_{n_1}^{(1)}$ by the index $n_1$ in the codebook $C_1$;
> sixth determining submodule, configured to determine the third precoder $\mathbf{W}_2$ as
>
> $$\mathbf{W}_2 = \mathbf{W}_{k_2}^{(2)}\mathbf{W}_{n_1}^{(1)}.$$

Note that for skilled person in the art, the embodiment above may be used for at least one subband.

The embodiment above allows to reduce the number of reported indices and save the system resources, without performance reducing.

All functional units in the embodiments of the present invention may be integrated into a processing module, or exist independently, or two or more of such units are integrated into a module. The integrated module may be hardware or a software module. When being implemented as a software module and sold or applied as an independent product, the integrated module may also be stored in a computer-readable storage medium.

The storage medium may be a Read-Only Memory (ROM), magnetic disk or Compact | Disk (CD).

apparent that those skilled in the art can make modifications and variations to the invention without departing from the scope of the invention. The invention is intended to cover the modifications and variations provided that they fall in the scope of protection defined by the following claims.

## Claims

1. A method for precoding in a wireless communication system, comprising:

   > obtaining (S201), by a receiver, a reference signal from a transmitter;
   > deriving (S202), by the receiver, a rank indication, a codebook index $n_1$ in a first code-book $C_1$, codebook indices $k_1$ and $k_2$ in a second codebook $C_2$, a wideband channel quality indicator, $CQI_1$, and a subband channel quality indicator, $CQI_2$, based on the obtained reference signal;

sending (S203), by the receiver, the rank indication, the codebook index $n_1$ in the first codebook $C_1$, the codebook indices $k_1$ and $k_2$ in the second codebook $C_2$, the wideband $CQI_1$ and the subband $CQI_2$, to the transmitter; and receiving (S204), by the receiver, data precoded by a first precoder from the transmitter, wherein the first precoder is determined by the transmitter based on the rank indication and the indices $n_1$, $k_1$ and $k_2$;
**characterized in that**:

the first precoder comprises a second precoder and a third precoder, wherein the second precoder is determined by the indices $n_1$ and $k_1$ at the transmitter, and the third precoder is determined by the indices $n_1$ and $k_2$ at the transmitter, wherein the second precoder represents a wideband precoder, and the third precoder represents a subband precoder.

2. The method according to claim 1, wherein:

the second precoder $W_1$ is determined as $W_1 = W_{n_1}^{(1)} W_{k_1}^{(2)}$ , wherein the $W_{n_1}^{(1)}$ represents a matrix determined by the index $n_1$ in the codebook $C_1$, and the $W_{k_1}^{(2)}$ represents a matrix determined by the index $k_1$ in the codebook $C_2$; and
the third precoder $W_2$ is determined as $W_2 = W_{n_1}^{(1)} W_{k_2}^{(2)}$, wherein the $W_{n_1}^{(1)}$ represents a matrix determined by the index $n_1$ in the codebook $C_1$, and the $W_{k_2}^{(2)}$ represents a matrix determined by the index $k_2$ in the codebook $C_2$.

3. The method according to claim 2, wherein:

the $W_{k_1}^{(2)}$ is an identity matrix or a block matrix composed of identity matrices of smaller dimension.

4. The method according to claim 1, wherein:

the second precoder $W_1$ is determined as $W_1 = W_{k_1}^{(2)} W_{n_1}^{(1)}$, wherein the $W_{k_1}^{(2)}$ represents a matrix determined by the index $k_1$ in the codebook $C_2$, and the $W_{n_1}^{(1)}$ represents a matrix determined by the index $n_1$ in the codebook $C_1$; and

the third precoder $W_2$ is determined as $W_2 = W_{k_2}^{(2)} W_{n_1}^{(1)}$ , wherein the $W_{k_2}^{(2)}$ represents a matrix determined by the index $k_2$ in the codebook $C_2$, and the $W_{n_1}^{(1)}$ represents a matrix determined by the index $n_1$ in the codebook $C_1$.

5. The method according to claim 1, wherein:

the codebook $C_2$ and codebook $C_1$ are derived by both the transmitter and the receiver.

6. A user equipment, comprising:

an obtaining unit (1901), configured to obtain a reference signal from a transmitter;
a deriving unit (1902), configured to derive a rank indication, a codebook index $n_1$ in a first codebook $C_1$, codebook indices $k_1$ and $k_2$ in a second codebook $C_2$, a wideband channel quality indicator $CQI_1$ and a subband channel quality indicator $CQI_2$, based on the reference signal obtained by the obtaining unit;
a sending unit (1903), configured to send the rank indication, the codebook index $n_1$ in the first codebook $C_1$, the codebook indices $k_1$ and $k_2$ in the second codebook $C_2$, the wideband $CQI_1$ and the subband $CQI_2$ to the transmitter; and
a receiving unit (1904), configured to receive, from the transmitter, data precoded by a first precoder, wherein the first precoder is determined by the transmitter based on the rank indication and the indices $n_1$, $k_1$ and $k_2$;
**characterized in that** the first precoder comprises a second precoder and a third precoder, wherein the second precoder is determined by the indices $n_1$ and $k_1$ at the transmitter, and the third precoder is determined by the indices $n_1$ and $k_2$ at the transmitter, wherein the second precoder represents a wideband precoder, and the third precoder represents a subband precoder.

7. A transmitter, comprising:

a receiving unit (2001), configured to receive a rank indication, a codebook index $n_1$ in a first codebook $C_1$, codebook indices $k_1$ and $k_2$ in a second codebook $C_2$, a wideband channel quality indicator, $CQI_1$, and a subband channel quality indicator $CQI_2$, from a user equipment;
a deriving unit (2002), configured to derive a first precoder determined based on the rank indication and the indices $n_1$, $k_1$ and $k_2$ received by the receiving unit; and

a precoding unit (2003), configured to precode data to be sent to the user equipment by the first precoder derived by the deriving unit; and

a sending unit (2004), configured to send the data precoded by the precoding unit to the user equipment;

**characterized in that** the deriving unit (2002) comprises:

a first deriving module, configured to derive a second precoder representing a wideband precoder determined by the indices $n_1$ and $k_1$ ;and

a second deriving module, configured to derive a third precoder representing a subband precoder determined by the indices $n_1$ and $k_2$.

8. The transmitter according to claim 7, wherein the first deriving module comprises:

a first determining submodule, configured to determine a matrix $\mathbf{W}_{n_1}^{(1)}$ by the index $n_1$ in the codebook $C_1$;

a second determining submodule, configured to determine a matrix $\mathbf{W}_{k_1}^{(2)}$ by the index $k_1$ in the codebook $C_2$; and

a third determining submodule, configured to determine the second precoder $W_1$ as

$$\mathbf{W}_1 = \mathbf{W}_{n_1}^{(1)}\mathbf{W}_{k_1}^{(2)} ;$$ and

the second deriving module comprises:

a fourth determining submodule, configured to determine a matrix $\mathbf{W}_{n_1}^{(1)}$ by the index $n_1$ in the codebook $C_1$;

a fifth determining submodule, configured to determine a matrix $\mathbf{W}_{k_2}^{(2)}$ by the index $k_2$ in the codebook $C_2$; and

a sixth determining submodule, configured to determine the third precoder $\mathbf{W}_2$ as

$$\mathbf{W}_2 = \mathbf{W}_{n_1}^{(1)}\mathbf{W}_{k_2}^{(2)} ;$$

9. The transmitter according to claim 7, wherein the first deriving module comprises:

a first determining submodule, configured to determine a matrix $\mathbf{W}_{k_1}^{(2)}$ by the index $k_1$ in the codebook $C_2$;

a second determining submodule, configured to

determine a matrix $\mathbf{W}_{n_1}^{(1)}$ by the index $n_1$ in the codebook $C_1$; and

a third determining submodule, configured to determine the second precoder W, as

$$\mathbf{W}_1 = \mathbf{W}_{k_1}^{(2)}\mathbf{W}_{n_1}^{(1)} ;$$ and

the second deriving module comprises:

a fourth determining submodule, configured to determine a matrix $\mathbf{W}_{k_2}^{(2)}$ by the index $k_2$ in the codebook $C_2$;

a fifth determining submodule, configured to determine a matrix $\mathbf{W}_{n_1}^{(1)}$ by the index $n_1$ in the codebook $C_1$; and

a sixth determining submodule, configured to determine the third precoder $\mathbf{W}_2$ as

$$\mathbf{W}_2 = \mathbf{W}_{k_2}^{(2)}\mathbf{W}_{n_1}^{(1)} .$$

10. The transmitter according to any one of claims 7 to 9,wherein the transmitter is a base station.

11. A method for precoding in a wireless communication system, comprising:

receiving (2101), by a transmitter, a rank indication, a codebook index $n_1$ in a first codebook $C_1$, codebook indices $k_1$ and $k_2$ in a second codebook $C_2$, a wideband channel quality indicator, $CQI_1$, and the subband channel quality indicator, $CQI_2$, from a user equipment;

deriving (2102), by the transmitter, a first precoder determined based on the rank indication and the indices $n_1$, $k_1$ and $k_2$ received by the transmitter;

precoding (2103), by the transmitter, data to be sent to the user equipment by the first precoder derived by the transmitter; and

sending (2104), by the transmitter, the data precoded by the precoding unit to the user equipment;

**characterized in that** the first precoder comprises a second precoder and a third precoder, wherein the second precoder is determined by the indices $n_1$ and $k_1$ at the transmitter, and the third precoder is determined by the indices $n_1$ and $k_2$ at the transmitter, wherein the second precoder represents a wideband precoder, and the third precoder represents a subband precoder.

12. The method according to claim 11, wherein the second precoder is determined by the indices $n_1$ and $k_1$

at the transmitter comprises:

the second precoder $\mathbf{W_1}$ is determined as

$\mathbf{W_1} = \mathbf{W}_{n_1}^{(1)}\mathbf{W}_{k_1}^{(2)}$, wherein the $\mathbf{W}_{n_1}^{(1)}$ represents a matrix determined by the index $n_1$ in the codebook $C_1$, and the $\mathbf{W}_{k_1}^{(2)}$ represents a matrix determined by the index $k_1$ in the codebook $C_2$; and
wherein the third precoder is determined by the indices $n_1$ and $k_2$ at the transmitter comprises:

the third precoder $\mathbf{W_2}$ is determined as

$\mathbf{W_2} = \mathbf{W}_{n_1}^{(1)}\mathbf{W}_{k_2}^{(2)}$, wherein the $\mathbf{W}_{n_1}^{(1)}$ represents a matrix determined by the index $n_1$ in the codebook $C_1$, and the $\mathbf{W}_{k_2}^{(2)}$ represents a matrix determined by the index $k_2$ in the codebook $C_2$.

13. The method according to claim 11, wherein the second precoder is determined by the indices $n_1$ and $k_1$ at the transmitter comprises:

the second precoder $\mathbf{W_1}$ is determined as

$\mathbf{W_1} = \mathbf{W}_{k_1}^{(2)}\mathbf{W}_{n_1}^{(1)}$, wherein the $\mathbf{W}_{k_1}^{(2)}$ represents a matrix determined by the index $k_1$ in the codebook $C_2$, and the $\mathbf{W}_{n_1}^{(1)}$ represents a matrix determined by the index $n_1$ in the codebook $C_1$; and
wherein the third precoder is determined by the indices $n_1$ and $k_2$ at the transmitter comprises:

the third precoder $\mathbf{W_2}$ is determined as

$\mathbf{W_2} = \mathbf{W}_{k_2}^{(2)}\mathbf{W}_{n_1}^{(1)}$, wherein the $\mathbf{W}_{k_2}^{(2)}$ represents a matrix determined by the index $k_2$ in the codebook $C_2$, and the $\mathbf{W}_{n_1}^{(1)}$ represents a matrix determined by the index $n_1$ in the codebook $C_1$.

14. A system for precoding, comprising:

a transmitter according to any one of claims 7 to 10 and a user equipment according to claim 6.

15. A computer program product, comprising:

a computer-readable medium comprising:

code for causing at least one computer to obtain a reference signal from a transmitter;
code for causing at least one computer to derive a rank indication, a codebook index $n_1$ in a first codebook $C_1$, codebook indices $k_1$ and $k_2$ in a second codebook $C_2$., a wideband channel quality indicator, $CQI_1$, and a subband channel quality indicator, $CQI_2$, based on the reference signal;
code for causing at least one computer to send the rank indication, the codebook index $n_1$ in the first codebook $C_1$, the codebook indices $k_1$ and $k_2$ in the second codebook $C_2$, the wideband $CQI_1$ and the subband $CQI_2$ to the transmitter; and
code for causing at least one computer to receive, from the transmitter, data precoded by a first precoder determined by the transmitter based on the rank indication and the indices $n_1$, $k_1$ and $k_2$;
**characterized in that** the first precoder comprises a second precoder and a third precoder, wherein the second precoder is determined by the indices $n_1$ and $k_1$ at the transmitter, and the third precoder is determined by the indices $n_1$ and $k_2$ at the transmitter, wherein the second precoder represents a wideband precoder, and the third precoder represents a subband precoder.

16. A computer program product, comprising:

a computer-readable medium comprising:

code for causing at least one computer to receive a rank indication, a codebook index $n_1$ in a first codebook $C_1$, codebook indices $k_1$ and $k_2$ in a second codebook $C_2$, the wideband channel quality indicator, $CQI_1$, and the subband channel quality indicator, $CQI_2$, from a user equipment;
code for causing at least one computer to derive a first precoder determined based on the rank indication and the indices $n_1$, $k_1$ and $k_2$ received;
code for causing at least one computer to precode data to be sent to the user equipment by the first precoder; and
code for causing at least one computer to send the data precoded to the user equipment;
**characterized in that** the first precoder comprises a second precoder and a third precoder, wherein the second precoder is determined by the indices $n_1$ and $k_1$ at the transmitter, and the third precoder is determined by the indices $n_1$ and $k_2$ at the transmitter,

wherein the second precoder represents a wideband precoder, and the third precoder represents a subband precoder.

**Patentansprüche**

1. Verfahren zum Vorcodieren in einem drahtlosen Kommunikationssystem, umfassend:

Erhalten (S201), durch einen Empfänger, eines Referenzsignals von einem Sender, Ableiten (S202), durch den Empfänger, einer Ranganzeige, eines Codebuchindexes $n_1$ in einem ersten Codebuch $C_1$, von Codebuchindices $k_1$ und $k_2$ in einem zweiten Codebuch $C_2$, eines Breitbandkanalqualitätsanzeigers, $CQI_1$, und eines Subbandkanalqualitätsanzeigers, $CQI_2$, basierend auf dem erhaltenen Referenzsignal; Senden (S203), durch den Empfänger, der Ranganzeige, des Codebuchindexes $n_1$ in dem ersten Codebuch $C_1$, der Codebuchindices $k_1$ und $k_2$ in dem zweiten Codebuch $C_2$, des Breitband-$CQI_1$ und des Subband-$CQI_2$ zu dem Sender; und Empfangen (S204), durch den Empfänger, von Daten, die von einem ersten Vorcodierer des Senders vorcodiert werden, wobei der erste Vorcodierer von dem Sender basierend auf der Ranganzeige und den Indices $n_1$, $k_1$ und $k_2$ bestimmt wird;
**dadurch gekennzeichnet, dass**:

der erste Vorcodierer einen zweiten Vorcodierer und einen dritten Vorcodierer umfasst, wobei der zweite Vorcodierer durch die Indices $n_1$ und $k_1$ an dem Sender bestimmt wird, und der dritte Vorcodierer durch die Indices $n_1$ und $k_2$ an dem Sender bestimmt wird, wobei der zweite Vorcodierer einen Breitbandvorcodierer repräsentiert und der dritte Vorcodierer einen Subbandvorcodierer repräsentiert.

2. Verfahren nach Anspruch 1, wobei:

der zweite Vorcodierer $W_1$ als $$W_1 = W_{n_1}^{(1)} W_{k_1}^{(2)}$$ bestimmt wird, wobei der $W_{n_1}^{(1)}$ eine Matrix repräsentiert, die durch den Index $n_1$ in dem Codebuch $C_1$ bestimmt wird, und der $W_{k_1}^{(2)}$ eine Matrix repräsentiert, die durch den Index $k_1$ in dem Codebuch $C_2$ bestimmt wird; und

der dritte Vorcodierer $W_2$ als $$W_2 = W_{n_1}^{(1)} W_{k_2}^{(2)}$$ bestimmt wird, wobei der $W_{n_1}^{(1)}$ eine Matrix repräsentiert, die durch den Index $n_1$ in dem Codebuch $C_1$ bestimmt wird, und der $W_{k_2}^{(2)}$ eine Matrix repräsentiert, die durch den Index $k_2$ in dem Codebuch $C_2$ bestimmt wird.

3. Verfahren nach Anspruch 2, wobei:

der $W_{k_1}^{(2)}$ eine Einheitsmatrix oder eine Blockmatrix ist, die aus Einheitsmatrizen niedriger Dimensionen zusammengesetzt ist.

4. Verfahren nach Anspruch 1, wobei:

der zweite Vorcodierer $W_1$ als $$W_1 = W_{k_1}^{(2)} W_{n_1}^{(1)}$$ bestimmt wird, wobei der $W_{k_1}^{(2)}$ eine Matrix repräsentiert, die durch den Index $k_1$ in dem Codebuch $C_2$ bestimmt wird, und der $W_{n_1}^{(1)}$ eine Matrix repräsentiert, die durch den Index $n_1$ in dem Codebuch $C_1$ bestimmt wird; und
der dritte Vorcodierer $W_2$ als $$W_2 = W_{k_2}^{(2)} W_{n_1}^{(1)}$$ bestimmt wird, wobei der $W_{k_2}^{(2)}$ eine Matrix repräsentiert, die durch den Index $k_2$ in dem Codebuch $C_2$ bestimmt wird, und der $W_{n_1}^{(1)}$ eine Matrix repräsentiert, die durch den Index $n_1$ in dem Codebuch $C_1$ bestimmt wird.

5. Verfahren nach Anspruch 1, wobei:

das Codebuch $C_2$ und das Codebuch $C_1$ sowohl durch den Sender als auch den Empfänger abgeleitet werden.

6. Benutzerausrüstung, umfassend:

eine Erhalteeinheit (1901), die zum Erhalten eines Referenzsignals von einem Sender ausgelegt ist, eine Ableiteeinheit (1902), die zum Ableiten einer Ranganzeige, eines Codebuchindexes $n_1$ in einem ersten Codebuch $C_1$, von Codebuchindices $k_1$ und $k_2$ in einem zweiten Codebuch $C_2$, eines Breitbandkanalqualitätsanzeigers, $CQI_1$, und eines Subbandkanalqualitätsanzeigers, $CQI_2$ basierend auf dem durch die Erhalteeinheit erhaltenen Referenzsignal ausgelegt ist;
eine Sendeinheit (1903), die zum Senden der Ranganzeige, des Codebuchindexes $n_1$ in dem ersten Codebuch $C_1$, der Codebuchindices $k_1$ und $k_2$ in dem zweiten Codebuch $C_2$, des Breitband-$CQI_1$ und des Subband-$CQI_2$ zu dem Sender ausgelegt ist; und

eine Empfangseinheit (1904), die zum Empfangen, von dem Sender, von Daten, die von einem ersten Vorcodierer vorcodiert werden, ausgelegt ist, wobei der erste Vorcodierer von dem Sender basierend auf der Ranganzeige und den Indices $n_1$, $k_1$ und $k_2$ bestimmt wird; **dadurch gekennzeichnet, dass** der erste Vorcodierer einen zweiten Vorcodierer und einen dritten Vorcodierer umfasst, wobei der zweite Vorcodierer durch die Indices $n_1$ und $k_1$ an dem Sender bestimmt wird, und der dritte Vorcodierer durch die Indices $n_1$ und $k_2$ an dem Sender bestimmt wird, wobei der zweite Vorcodierer einen Breitbandvorcodierer repräsentiert und der dritte Vorcodierer einen Subbandvorcodierer repräsentiert.

7. Sender, umfassend:

eine Empfangseinheit (2001), die zum Empfangen einer Ranganzeige, eines Codebuchindexes $n_1$ in einem ersten Codebuch $C_1$, von Codebuchindices $k_1$ und $k_2$ in einem zweiten Codebuch $C_2$, eines Breitbandkanalqualitätsanzeigers, $CQI_1$, und eines Subbandkanalqualitätsanzeigers, $CQI_2$, von einer Benutzerausrüstung ausgelegt ist; eine Ableiteeinheit (2002), die zum Ableiten eines ersten Vorcodierers ausgelegt ist, der basierend auf der Ranganzeige und den von der Empfangseinheit empfangenen Indices $n_1$, $k_1$ und $k_2$ bestimmt wird; und

eine Vorcodiereinheit (2003), die zum Vorcodieren von von dem ersten Vorcodierer zur Benutzerausrüstung zu sendenden Daten, die von der Ableiteeinheit abgeleitet wurden, ausgelegt ist; und

eine Sendeeinheit (2004), die zum Senden der von der Vorcodiereinheit vorcodierten Daten zu der Benutzerausrüstung ausgelegt ist; **dadurch gekennzeichnet, dass** die Ableiteeinheit (2002) Folgendes umfasst:

ein erstes Ableitemodul, das zum Ableiten eines zweiten einen Breitbandvorcodierer repräsentierenden Vorcodierers ausgelegt ist, der durch die Indices $n_1$ und $k_1$ bestimmt wird; und
ein zweites Ableitemodul, das zum Ableiten eines dritten einen Subbandvorcodierer repräsentierenden Vorcodierers ausgelegt ist, der durch die Indices $n_1$ und $k_2$ bestimmt

wird.

8. Sender nach Anspruch 7, wobei das erste Ableitemodul das Folgende umfasst:

ein erstes Bestimmungssubmodul, das zum Bestimmen einer Matrix $W_{n_1}^{(1)}$ durch den Index $n_1$ in dem Codebuch $C_1$ ausgelegt ist;
ein zweites Bestimmungssubmodul, das zum Bestimmen einer Matrix $W_{k_1}^{(2)}$ durch den Index $k_1$ in dem Codebuch $C_2$ ausgelegt ist; und
ein drittes Bestimmungssubmodul, das zum Bestimmen des zweiten Vorcodierers $W_1$ als

$$W_1 = W_{n_1}^{(1)} W_{k_1}^{(2)}$$ ausgelegt ist; und

das zweite Ableitemodul das Folgende umfasst:

ein viertes Bestimmungssubmodul, das zum Bestimmen einer Matrix $W_{n_1}^{(1)}$ durch den Index $n_1$ in dem Codebuch $C_1$ ausgelegt ist;
ein fünftes Bestimmungssubmodul, das zum Bestimmen einer Matrix $W_{k_2}^{(2)}$ durch den Index $k_2$ in dem Codebuch $C_2$ ausgelegt ist; und
ein sechstes Bestimmungssubmodul, das zum Bestimmen des dritten Vorcodierers $W_2$ als $$W_2 = W_{n_1}^{(1)} W_{k_2}^{(2)}$$ ausgelegt ist.

9. Sender nach Anspruch 7, wobei das erste Ableitemodul das Folgende umfasst:

ein erstes Bestimmungssubmodul, das zum Bestimmen einer Matrix $W_{k_1}^{(2)}$ durch den Index $k_1$ in dem Codebuch $C_2$ ausgelegt ist;
ein zweites Bestimmungssubmodul, das zum Bestimmen einer Matrix $W_{n_1}^{(1)}$ durch den Index $n_1$ in dem Codebuch $C_1$ ausgelegt ist; und
ein drittes Bestimmungssubmodul, das zum Bestimmen des zweiten Vorcodierers $W_1$ als

$$W_1 = W_{k_1}^{(2)} W_{n_1}^{(1)}$$ ausgelegt ist; und

das zweite Ableitemodul das Folgende umfasst:

ein viertes Bestimmungssubmodul, das zum Bestimmen einer Matrix $W_{k_2}^{(2)}$ durch den Index $k_2$ in dem Codebuch $C_2$ ausgelegt ist;

ein fünftes Bestimmungssubmodul, das zum Bestimmen einer Matrix $W_{n_1}^{(1)}$ durch den Index $n_1$ in dem Codebuch $C_1$ ausgelegt ist; und ein sechstes Bestimmungssubmodul, das zum Bestimmen des dritten Vorcodierers $W_2$ als

$$W_2 = W_{k_2}^{(2)} W_{n_1}^{(1)} \text{ ausgelegt ist.}$$

10. Sender nach einem der Ansprüche 7 bis 9, wobei der Sender eine Basisstation ist.

11. Verfahren zum Vorcodieren in einem drahtlosen Kommunikationssystem, das Folgende umfassend:

Empfangen (2101), durch einen Sender, einer Ranganzeige, eines Codebuchindexes $n_1$ in einem ersten Codebuch $C_1$, von Codebuchindices $k_1$ und $k_2$ in einem zweiten Codebuch $C_2$, eines Breitbandkanalqualitätsanzeigers, $CQI_1$, und des Subbandkanalqualitätsanzeigers, $CQI_2$, von einer Benutzerausrüstung; Ableiten (2102), durch den Sender, eines ersten Vorcodierers, der basierend auf der von dem Sender empfangenen Ranganzeige und den Indices $n_1$, $k_1$ und $k_2$, bestimmt wird; Vorcodieren (2103), durch den Sender, von durch den ersten Vorcodierer an die Benutzerausrüstung zu sendenden Daten, die von dem Sender abgeleitet wurden; und Senden (2104), durch den Sender, der Daten, die von der Vorcodiereinheit vorcodiert wurden, an die Benutzerausrüstung; **dadurch gekennzeichnet, dass** der erste Vorcodierer einen zweiten Vorcodierer und einen dritten Vorcodierer umfasst, wobei der zweite Vorcodierer durch die Indices $n_1$ und $k_1$ an dem Sender bestimmt wird, und der dritte Vorcodierer durch die Indices $n_1$ und $k_2$ an dem Sender bestimmt wird, wobei der zweite Vorcodierer einen Breitbandvorcodierer repräsentiert und der dritte Vorcodierer einen Subbandvorcodierer repräsentiert.

12. Verfahren nach Anspruch 11, wobei der zweite Vorcodierer durch die Indices $n_1$ und $k_1$ an dem Sender bestimmt wird Folgendes umfasst:

der zweite Vorcodierer $W_1$ wird als

$$W_1 = W_{n_1}^{(1)} W_{k_1}^{(2)} \text{ bestimmt, wobei der}$$

$W_{n_1}^{(1)}$ eine Matrix repräsentiert, die durch den Index $n_1$ in dem Codebuch $C_1$ bestimmt wird, und der $W_{k_1}^{(2)}$ eine Matrix repräsentiert, die durch den Index $k_1$ in dem Codebuch $C_2$ be-

stimmt wird; und wobei der dritte Vorcodierer, der durch die Indices $n_1$ und $k_2$ an dem Sender bestimmt wird, umfasst:

der dritte Vorcodierer $W_2$ wird als

$$W_2 = W_{n_1}^{(1)} W_{k_2}^{(2)} \text{ bestimmt, wobei der}$$

$W_{n_1}^{(1)}$ eine Matrix repräsentiert, die durch den Index $n_1$ in dem Codebuch $C_1$ bestimmt wird, und der $W_{k_1}^{(2)}$ eine Matrix repräsentiert, die durch den Index $k_2$ in dem Codebuch $C_2$ bestimmt wird.

13. Verfahren nach Anspruch 11, wobei die Bestimmung des zweiten Vorcodierers durch die Indices $n_1$ und $k_1$ an dem Sender Folgendes umfasst:

der zweite Vorcodierer $W_1$ wird als $W_1 = W_{k_1}^{(2)} W_{n_1}^{(1)}$ bestimmt, wobei der $W_{k_1}^{(2)}$ eine Matrix repräsentiert, die durch den Index $k_1$ in dem Codebuch $C_2$ bestimmt wird, und der $W_{n_1}^{(1)}$ eine Matrix repräsentiert, die durch den Index $n_1$ in dem Codebuch $C_1$ bestimmt wird; und wobei der dritte Vorcodierer, der durch die Indices $n_1$ und $k_2$ an dem Sender bestimmt wird, umfasst:

der dritte Vorcodierer $W_2$ wird als

$$W_2 = W_{k_2}^{(2)} W_{n_1}^{(1)} \text{ bestimmt, wobei der}$$

$W_{k_2}^{(2)}$ eine Matrix repräsentiert, die durch den Index $k_2$ in dem Codebuch $C_2$ bestimmt wird, und der $W_{n_1}^{(1)}$ eine Matrix repräsentiert, die durch den Index $n_1$ in dem Codebuch $C_1$ bestimmt wird.

14. System zum Vorcodieren, umfassend:

einen Sender nach einem der Ansprüche 7 bis 10 und eine Benutzerausrüstung nach Anspruch 6.

15. Computerprogrammprodukt, umfassend:

ein computerlesbares Medium, das das Folgende umfasst:

Code zum Veranlassen mindestens eines Computers, ein Referenzsignal von einem Sender zu erhalten;

Code zum Veranlassen mindestens eines Computers, eine Ranganzeige, einen Codebuchindex $n_1$ in einem ersten Codebuch $C_1$, Codebuchindices $k_1$ und $k_2$ in einem zweiten Codebuch $C_2$, einen Breitbandkanalqualitätsanzeiger, $CQI_1$, und einen Subbandkanalqualitätsanzeiger, $CQI_2$, basierend auf dem Referenzsignal abzuleiten;

Code zum Veranlassen mindestens eines Computers, die Ranganzeige, den Codebuchindex $n_1$ in dem ersten Codebuch $C_1$, die Codebuchindices $k_1$ und $k_2$ in dem zweiten Codebuch $C_2$, den Breitband-$CQI_1$ und den Subband-$CQI_2$ zu dem Sender zu senden; und

Code zum Veranlassen mindestens eines Computers, Daten von dem Sender zu empfangen, die von einem ersten Vorcodierer vorcodiert wurden, der von dem Sender basierend auf der Ranganzeige und den Indices $n_1$, $k_1$ und $k_2$ bestimmt wird; **dadurch gekennzeichnet, dass** der erste Vorcodierer einen zweiten Vorcodierer und einen dritten Vorcodierer umfasst, wobei der zweite Vorcodierer durch die Indices $n_1$ und $k_1$ an dem Sender bestimmt wird, und der dritte Vorcodierer durch die Indices $n_1$ und $k_2$ an dem Sender bestimmt wird, wobei der zweite Vorcodierer einen Breitbandvorcodierer repräsentiert und der dritte Vorcodierer einen Subbandvorcodierer repräsentiert.

16. Computerprogrammprodukt, umfassend:

ein computerlesbares Medium, das das Folgende umfasst:

Code zum Veranlassen mindestens eines Computers, eine Ranganzeige, einen Codebuchindex $n_1$ in einem ersten Codebuch $C_1$, Codebuchindices $k_1$ und $k_2$ in einem zweiten Codebuch $C_2$, den Breitbandkanalqualitätsanzeiger, $CQI_1$, und den Subbandkanalqualitätsanzeiger, $CQI_2$, von einer Benutzerausrüstung zu erhalten;

Code zum Veranlassen mindestens eines Computers, einen ersten Vorcodierer, der basierend auf der erhaltenen Ranganzeige und den erhaltenen Indices $n_1$, $k_1$ und $k_2$ bestimmt wird, abzuleiten;

Code zum Veranlassen mindestens eines Computers, von dem ersten Vorcodierer an die Benutzerausrüstung zu sendende Daten vorzucodieren; und

Code zum Veranlassen mindestens eines Computers, die vorcodierten Daten an die Benutzerausrüstung zu senden; **dadurch gekennzeichnet, dass** der erste Vorcodierer einen zweiten Vorcodierer und einen dritten Vorcodierer umfasst, wobei der zweite Vorcodierer durch die Indices $n_1$ und $k_1$ an dem Sender bestimmt wird, und der dritte Vorcodierer durch die Indices $n_1$ und $k_2$ an dem Sender bestimmt wird, wobei der zweite Vorcodierer einen Breitbandvorcodierer repräsentiert und der dritte Vorcodierer einen Subbandvorcodierer repräsentiert.

**Revendications**

1. Procédé de précodage dans un système de communication sans fil, comprenant les étapes suivantes :

obtenir (S201), par un récepteur, un signal de référence d'un émetteur ;

dériver (S202), par le récepteur, une indication de rang, un index de livre de codes $n_1$ dans un premier livre de codes $C_1$, des indices de livre de codes $k_1$ et $k_2$ dans un second livre de codes $C_2$, un indicateur de qualité de canal à bande large, $CQI_1$, et un indicateur de qualité de canal de sous-bande, $CQI_2$, sur la base du signal de référence obtenu ;

envoyer (S203), par le récepteur, l'indication de rang, l'index de livre de codes $n_1$ dans un premier livre de codes $C_1$, les indices de livre de codes $k_1$ et $k_2$ dans le second livre de codes $C_2$, l'indicateur bande large $CQI_1$ et l'indicateur de sous-bande $CQI_2$ à l'émetteur ; et

recevoir (S204), par le récepteur, des données précodées par un premier précodeur, de l'émetteur, où le premier précodeur est déterminé par l'émetteur sur la base de l'indication de rang et des indices $n_1$, $k_1$ et $k_2$ ; **caractérisé en ce que** :

le premier précodeur comprend un deuxième précodeur et un troisième précodeur, où le deuxième précodeur est déterminé par les indices $n_1$ et $k_1$ au niveau de l'émetteur, et le troisième précodeur est déterminé par les indices $n_1$ et $k_2$ au niveau de l'émetteur, où le deuxième précodeur représente un précodeur de large bande, et le troisième précodeur représente un précodeur de sous-bande.

2. Procédé selon la revendication 1, dans lequel :

le deuxième précodeur $W_1$ est déterminé par

$$W_1 = W_{n1}^{(1)} W_{k1}^{(2)}, \text{ où } W_{n1}^{(1)} \qquad \text{où}$$

$W_{n1}^{(1)}$ représente une matrice déterminée par l'index $n_1$ dans le livre de codes $C_1$, et $W_{k1}^{(2)}$ représente une matrice déterminée par l'index $k_1$ dans le livre de codes $C_2$ ; et
le troisième précodeur $W_2$ est déterminé par

$$W_2 = W_{n1}^{(1)} W_{k2}^{(2)}, \text{ où } W_{n1}^{(1)} \text{ où } W_{n1}^{(1)}$$

représente une matrice déterminée par l'index $n_1$ dans le livre de codes $C_1$, et $W_{k2}^{(2)}$ représente une matrice déterminée par l'index $k_2$ dans le livre de codes $C_2$.

3. Procédé selon la revendication 2, dans lequel :

   $W_{k1}^{(2)}$ est une matrice identité ou une matrice par blocs composée de matrices identité de plus petites dimensions.

4. Procédé selon la revendication 1, dans lequel :

   le deuxième précodeur $W_1$ est déterminé par $W_1 = W_{k1}^{(2)} W_{n1}^{(1)}$, où $W_{k1}^{(2)}$ représente une matrice déterminée par l'index $k_1$ dans le livre de codes $C_2$, et $W_{n1}^{(1)}$ représente une matrice déterminée par l'index $n_1$ dans le livre de codes $C_1$ ; et
   le troisième précodeur $W_2$ est déterminé par $W_2 = W_{k2}^{(2)} W_{n1}^{(1)}$, où $W_{k2}^{(2)}$ représente une matrice déterminée par l'index $k_2$ dans le livre de codes $C_2$, et $W_{n1}^{(1)}$ représente une matrice déterminée par l'index $n_1$ dans le livre de codes $C_1$.

5. Procédé selon la revendication 1, dans lequel :

   le livre de codes $C_2$ et le livre de codes $C_1$ sont dérivés par à la fois l'émetteur et le récepteur.

6. Équipement utilisateur comprenant :

   une unité d'obtention (1901), configurée pour obtenir un signal de référence d'un émetteur ;
   une unité de dérivation (1902), configurée pour dériver une indication de rang, un index de livre de codes $n_1$ dans un premier livre de codes $C_1$, des indices de livre de codes $k_1$ et $k_2$ dans un second livre de codes $C_2$, un indicateur de qualité de canal à bande large, $CQI_1$, et un indicateur de qualité de canal de sous-bande, $CQI_2$, sur la base du signal de référence obtenu par l'unité d'obtention ;
   une unité d'envoi (1903), configurée pour envoyer l'indication de rang, l'index de livre de codes $n_1$ dans un premier livre de codes $C_1$, les

indices de livre de codes $k_1$ et $k_2$ dans le second livre de codes $C_2$, l'indicateur bande large $CQI_1$ et l'indicateur de sous-bande $CQI_2$ à l'émetteur ; et
une unité de réception (1904), configurée pour recevoir, depuis l'émetteur, des données précodées par un premier précodeur, où le premier précodeur est déterminé par l'émetteur sur la base de l'indication de rang et des indices $n_1$, $k_1$ et $k_2$ ;
**caractérisé en ce que** le premier précodeur comprend un deuxième précodeur et un troisième précodeur, où le deuxième précodeur est déterminé par les indices $n_1$ et $k_1$ au niveau de l'émetteur, et le troisième précodeur est déterminé par les indices $n_1$ et $k_2$ au niveau de l'émetteur, où le deuxième précodeur représente un précodeur de large bande, et le troisième précodeur représente un précodeur de sous-bande.

7. Émetteur comprenant :

   une unité de réception (2001), configurée pour recevoir une indication de rang, un index de livre de codes $n_1$ dans un premier livre de codes $C_1$, des indices de livre de codes $k_1$ et $k_2$ dans un second livre de codes $C_2$, un indicateur de qualité de canal à bande large, $CQI_1$, et un indicateur de qualité de canal de sous-bande, $CQI_2$, depuis un équipement utilisateur ;
   une unité de dérivation (2002), configurée pour dériver un premier précodeur déterminé sur la base de l'indication de rang et des indices $n_1$, $k_1$ et $k_2$ reçus par l'unité de réception ; et
   une unité de précodage (2003), configurée pour précoder des données à envoyer à l'équipement utilisateur par le premier précodeur dérivé par l'unité de dérivation ; et une unité d'envoi (2004), configurée pour envoyer les données précodées par l'unité de précodage à l'équipement utilisateur ;
   **caractérisé en ce que** l'unité de dérivation (2002) comprend :

   un premier module de dérivation, configuré pour dériver un deuxième précodeur représentant un précodeur de large bande déterminé par les indices $n_1$ et $k_1$ ; et
   un second module de dérivation, configuré pour dériver un troisième précodeur représentant un précodeur de sous-bande déterminé par les indices $n_1$ et $k_2$.

8. Émetteur selon la revendication 7, dans lequel le premier module de dérivation comprend :

   un premier sous-module de détermination, configuré pour déterminer une matrice $W_{n1}^{(1)}$ par l'index $n_1$ dans le livre de codes $C_1$ ;

un deuxième sous-module de détermination, configuré pour déterminer une matrice $W_{k1}^{(2)}$ par l'index $k_1$ dans le livre de codes $C_2$ ; et

un troisième sous-module de détermination, configuré pour déterminer le deuxième précodeur $W_1$ par $W_1 = W_{n1}^{(1)} W_{k1}^{(2)}$ ; et

le deuxième module de dérivation comprend :

un quatrième sous-module de détermination, configuré pour déterminer une matrice $W_{n1}^{(1)}$ par l'index $n_1$ dans le livre de codes $C_1$ ;

un cinquième sous-module de détermination, configuré pour déterminer une matrice $W_{k2}^{(2)}$ par l'index $k_2$ dans le livre de codes $C_2$ ; et

un sixième sous-module de détermination, configuré pour déterminer le troisième précodeur $W_2$ par $W_2 = W_{n1}^{(1)} W_{k2}^{(2)}$.

9. Émetteur selon la revendication 7, dans lequel le premier module de dérivation comprend :

un premier sous-module de détermination, configuré pour déterminer une matrice $W_{k1}^{(2)}$ par l'index $k_1$ dans le livre de codes $C_2$ ;

un deuxième sous-module de détermination, configuré pour déterminer une matrice $W_{n1}^{(1)}$ par l'index $n_1$ dans le livre de codes $C_1$ ; et

un troisième sous-module de détermination, configuré pour déterminer le deuxième précodeur $W_1$ par $W_1 = W_{k1}^{(2)} W_{n1}^{(1)}$; et

le deuxième module de dérivation comprend :

un quatrième sous-module de détermination, configuré pour déterminer une matrice $W_{k2}^{(2)}$ par l'index $k_2$ dans le livre de codes $C_2$ ;

un cinquième sous-module de détermination, configuré pour déterminer une matrice $W_{n1}^{(1)}$ par l'index $n_1$ dans le livre de codes $C_1$ ; et

un sixième sous-module de détermination, configuré pour déterminer le troisième précodeur $W_2$ par $W_2 = W_{k2}^{(2)} W_{n1}^{(1)}$.

10. Émetteur selon l'une quelconque des revendications 7 à 9, dans lequel l'émetteur est une station de base.

11. Procédé de précodage dans un système de communication sans fil, comprenant les étapes suivantes :

recevoir (2101), par un émetteur, une indication de rang, un index de livre de codes $n_1$ dans un premier livre de codes $C_1$, des indices de livre de codes $k_1$ et $k_2$ dans un second livre de codes $C_2$, un indicateur de qualité de canal à bande large, $CQI_1$, et l'indicateur de qualité de canal de sous-bande, $CQI_2$, depuis un équipement utilisateur ;

dériver (2102), par l'émetteur, un premier précodeur déterminé sur la base de l'indication de rang et des indices $n_1$, $k_1$ et $k_2$ reçus par l'émetteur ;

précoder (2103), par l'émetteur, des données à envoyer à l'équipement utilisateur par le premier précodeur dérivé par l'émetteur ; et

envoyer (2104), par l'émetteur, les données précodées par l'unité de précodage à l'équipement utilisateur ;

**caractérisé en ce que** le premier précodeur comprend un deuxième précodeur et un troisième précodeur, où le deuxième précodeur est déterminé par les indices $n_1$ et $k_1$ au niveau de l'émetteur, et le troisième précodeur est déterminé par les indices $n_1$ et $k_2$ au niveau de l'émetteur,

où le deuxième précodeur représente un précodeur de large bande, et le troisième précodeur un précodeur de sous-bande.

12. Procédé selon la revendication 11, dans lequel le deuxième précodeur est déterminé par les indices $n_1$ et $k_1$ au niveau de l'émetteur comprend les étapes suivantes:

le deuxième précodeur $W_1$ est déterminé par $W_1 = W_{n1}^{(1)} W_{k1}^{(2)}$, où $W_{n1}^{(1)}$ représente une matrice déterminée par l'index $n_1$ dans le livre de codes $C_1$, et $W_{k1}^{(2)}$ représente une matrice déterminée par l'index $k_1$ dans le livre de codes $C_2$ ; et

où le troisième précodeur est déterminé par les indices $n_1$ et $k_2$ au niveau de l'émetteur :

le troisième précodeur $W_2$ est déterminé par $W_2 = W_{n1}^{(1)} W_{k2}^{(2)}$, où $W_{n1}^{(1)}$ représente une matrice déterminée par l'index $n_1$ dans le livre de codes $C_1$, et $W_{k2}^{(2)}$ représente une matrice déterminée par l'index $k_2$ dans le livre de codes $C_2$.

13. Procédé selon la revendication 11, dans lequel la détermination du deuxième précodeur par les indices $n_1$ et $k_1$ au niveau de l'émetteur comprend les étapes suivantes:

le deuxième précodeur $W_1$ est déterminé par $W_1 = W_{k1}^{(2)} W_{n1}^{(1)}$, où $W_{k1}^{(2)}$ représente une matrice déterminée par l'index $k_1$ dans le livre de codes $C_2$, et $W_{n1}^{(1)}$ représente une matrice déterminée par l'index $n_1$ dans le livre de codes $C_1$ ; et

où le troisième précodeur est déterminé par les

indices $n_1$ et $k_2$ au niveau de l'émetteur :

le troisième précodeur $W_2$ est déterminé par $W_2 = W_{k_2}^{(2)} W_{n_1}^{(1)}$, où $W_{k_2}^{(2)}$ représente une matrice déterminée par l'index $k_2$ dans le livre de codes $C_2$, et $W_{n_1}^{(1)}$ représente une matrice déterminée par l'index $n_1$ dans le livre de codes $C_1$.

14. Système de précodage comprenant :

un émetteur selon l'une quelconque des revendications 7 à 10 et un équipement utilisateur selon la revendication 6.

15. Produit programme informatique, comprenant :

un support lisible par ordinateur comprenant :

un code pour amener au moins un ordinateur à obtenir un signal de référence d'un émetteur ;

un code pour amener au moins un ordinateur à dériver une indication de rang, un index de livre de codes $n_1$ dans un premier livre de codes $C_1$, des indices de livre de codes $k_1$ et $k_2$ dans un second livre de codes $C_2$, un indicateur de qualité de canal à bande large, $CQI_1$, et un indicateur de qualité de canal de sous-bande, $CQI_2$, sur la base du signal de référence ;

un code pour amener au moins un ordinateur à envoyer l'indication de rang, l'index de livre de codes $n_1$ dans le premier livre de codes $C_1$, les indices de livre de codes $k_1$ et $k_2$ dans le second livre de codes $C_2$, l'indicateur bande large $CQI_1$ et l'indicateur de sous-bande $CQI_2$ à l'émetteur ; et

un code pour amener au moins un ordinateur à recevoir, depuis l'émetteur, des données précodées par un premier précodeur déterminées par l'émetteur sur la base de l'indication de rang et des indices $n_1$, $k_1$ et $k_2$ ;

**caractérisé en ce que** le premier précodeur comprend un deuxième précodeur et un troisième précodeur, où le deuxième précodeur est déterminé par les indices $n_1$ et $k_1$ au niveau de l'émetteur, et le troisième précodeur est déterminé par les indices $n_1$ et $k_2$ au niveau de l'émetteur, où le deuxième précodeur représente un précodeur de large bande, et le troisième précodeur représente un précodeur de sous-bande.

16. Produit programme informatique, comprenant :

un support lisible par ordinateur comprenant :

un code pour amener au moins un ordinateur à recevoir une indication de rang, un index de livre de codes $n_1$ dans un premier livre de codes $C_1$, des indices de livre de codes $k_1$ et $k_2$ dans un second livre de codes $C_2$, l'indicateur de qualité de canal à bande large, $CQI_1$, et l'indicateur de qualité de canal de sous-bande, $CQI_2$, depuis un équipement utilisateur ;

un code pour amener au moins un ordinateur à dériver un premier précodeur déterminé sur la base de l'indication de rang et des indices $n_1$, $k_1$ et $k_2$ reçus ;

un code pour amener au moins un ordinateur à précoder des données à envoyer à l'équipement utilisateur par le premier précodeur ; et

un code pour amener au moins un ordinateur à envoyer les données précodées à l'équipement utilisateur ;

**caractérisé en ce que** le premier précodeur comprend un deuxième précodeur et un troisième précodeur, où le deuxième précodeur est déterminé par les indices $n_1$ et $k_1$ au niveau de l'émetteur, et le troisième précodeur est déterminé par les indices $n_1$ et $k_2$ au niveau de l'émetteur, où le deuxième précodeur représente un précodeur de large bande, et le troisième précodeur un précodeur de sous-bande.

obtaining a reference signal from a transmitter; — S201

deriving a rank indication, one codebook index $n_1$ in a first codebook $C_1$, two codebook indices $k_1$ and $k_2$ in a second codebook $C_2$, a wideband $CQI_1$ and a subband $CQI_2$, based on the obtained reference signal; — S202

sending at least one feedback message conveying the rank, the codebook index $n_1$ in a first codebook $C_1$, the two codebook indices $k_1$ and $k_2$ in a second codebook $C_2$, the wideband $CQI_1$ and the subband $CQI_2$, to the transmitter; — S203

receiving, from the transmitter, data precoded by a matrix derived based on the rank indication and the indices $n_1$, $k_1$ and $k_2$. — S204

Fig. 1

receiver feeds back a first message that contains the rank indication;

receiver feeds back a second message that contains the indices $n_1$ and $k_1$ and wideband CQI$_1$;

receiver feeds back a second message that contains the index $k_2$ and wideband CQI$_2$;

receiver receives, from the transmitter, data precoded by a matrix derived based on the rank indication and the indices $n_1$, $k_1$ and $k_2$.

Fig. 2

| receiver sends a first message that contains the rank indication; |
|---|

| receiver sends a second message that contains the index $n_1$ and wideband CQI$_1$; |
|---|

| receiver sends a second feedback message that contains the index $k_2$ and wideband CQI$_2$; |
|---|

| receiver receives, from the transmitter, data precoded by a matrix derived based on the rank indication and the indices $n_1$, $k_1$ and fixed index $k_2$. |
|---|

Fig. 3

Fig. 4

Fig. 5

a transmitter receives a rank indication, a codebook index $n_1$ in a first codebook $C_1$, codebook indices $k_1$ and $k_2$ in a second codebook $C_2$, the wideband channel quality indicator $CQI_1$ and the subband channel quality indicator $CQI_2$ from a user equipment

2101

the transmitter derives a first precoder determined based on the rank indication and the indices $n_1$, $k_1$ and $k_2$ received by the transmitter

2102

the transmitter precodes the data to be sent to the user equipment by the first precoder derived by the transmitter

2103

the transmitter sends the data precoded by the precoding unit to the user equipment.

2104

Fig. 6

transmitter

1701

user equipment

1702

Fig. 7

**EP 2 594 030 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009096708 A1